# EUROPEAN PATENT SPECIFICATION

(11) **EP 1 711 429 B1**
(45) Date of publication and mention of the grant of the patent: **21.12.2016**
(21) Application number: 04800267.9
(22) Date of filing: 03.11.2004
(51) Int. Cl.: B67D 7/42, B67D 7/54, B67D 7/08, B67D 7/60

(54) **USE OF A METHOD AND A SYSTEM FOR SPILL-FREE REFILLING OF LIQUIDS, GUN FOR SPILL-FREE REFILLING OF LIQUIDS, CONNECTION FOR A TANK, METHOD AND SYSTEM FOR CONTROL AND COMMUNICATION IN A SPILL-FREE LIQUID REFILLING SYSTEM, METHOD AND SYSTEM FOR MEDIA PROVISION IN A SPILL-FREE REFILLING SYSTEM, SPILL-FREE AND LIQUID-TIGHT REFILL**
VERWENDUNG EINES VERFAHRENS UND EINES SYSTEMS ZUM ÜBERLAUFFREIEN NACHFÜLLEN VON FLÜSSIGKEITEN, PISTOLE ZUM ÜBERLAUFFREIEN NACHFÜLLEN VON FLÜSSIGKEITEN, VERBINDUNG FÜR EINEN TANK, VERFAHREN UND SYSTEM ZUR STEUERUNG UND VERBINDUNG IN EINEM ÜBERLAUFFREIEN NACHFÜLLSYSTEM, VERFAHREN UND SYSTEM ZUR BEREITSTELLUNG VON MEDIEN IN EINEM ÜBERLAUFFREIEN NACHFÜLLSYSTEM, ÜBERLAUFFREIE UND FLÜSSIGKEITSDICHTE NACHFÜLLUNG
UTILISATION D'UN PROCÉDÉ ET D'UN SYSTÈME AUX FINS DE REMPLISSAGE SANS FUITE DE LIQUIDES, PISTOLET DESTINÉ AU REMPLISSAGE SANS FUITE DE LIQUIDES, CONNEXION DESTINÉE À UN RÉSERVOIR, PROCÉDÉ ET SYSTÈME DE COMMANDE ET DE COMMUNICATION DANS UN SYSTÈME DE REMPLISSAGE DE LIQUIDES SANS FUITE, PROCÉDÉ ET SYSTÈME DE FOURNITURE DE MILIEU DANS UN SYSTÈME DE REMPLISSAGE SANS FUITE, REMPLISSAGE SANS FUITE ET ÉTANCHE AUX LIQUIDES

(30) Priority: 19.01.2004 SE 0400105
(43) Date of publication of application: 18.10.2006
(73) Proprietor: Identic AB, 186 23 Vallentuna (SE)
(72) Inventor: KÄLLBERG, Sylvid, 795 36 Rättvik (SE)
(74) Representative: Zacco Sweden AB
(86) International application number: PCT/SE2004/001604
(87) International publication number: WO 2005/068351

(56) References cited:
- EP-A1- 0 943 584
- WO-A1-03/052357
- WO-A1-03/104135
- DE-A1- 19 842 484
- DE-U1- 20 118 747
- DE-U1- 20 304 589
- US-A- 5 923 572
- US-A- 5 944 069
- US-A- 6 085 805
- US-A1- 2003 178 096
- US-B1- 6 263 924
- US-B1- 6 571 151

## Description

Use of a method and a system for spill-free refilling of liquids, gun for spill-free refilling of liquids, connection for a tank, method and system for control and communication in a spill-free liquid refilling system, method and system for media provision in a spill-free refilling system, spill-free and liquid-tight refilling connection and computer programme products

### BACKGROUND OF THE INVENTION

### Technical field

The present invention relates to a gun for spill-free refilling of liquids.

The invention also relates to a connection for a tank.

The invention further relates to a spill-free and liquid-tight refilling connection.

### Prior art

Previously known are methods and systems for spill-free refuelling of e.g. vehicles, such known techniques involving a spill-free coupling comprising a, normally male, fuel container part and a, normally female, refuelling nozzle part of a refuelling gun. According to such techniques, refuelling is not possible until a spill-free connection is established between said parts.

US 2003/0178096 A1 discloses a filling nozzle which is provided with a ring for fastening on an adaptor connected to a container and with a controller valve adapted to selectively obturate a conduit for flow of a fluid.

### SUMMARY OF THE INVENTION

According to recent development for reducing emissions from diesel engines, a liquid solution for selective catalytic reduction, SCR, an exhaust after-treatment technology, is used, a specific such compound being called AdBlue^{®} and comprising a 32,5 % by weight solution of urea in water, the compound being specified in the DIN standard DIN V 70 070, the urea solution, when applicable, being kept in a separate vehicle mounted tank or container of the diesel engine vehicle.

According to a first aspect of the present invention, a gun for spill-free refilling is provided as a solution to the problem of establishing a safe and detectable spill-free connection between a liquid container and a refilling nozzle, and the problem of handling solutions for SCR, when applicable.

According to a second aspect of the present invention, a liquid container connection is provided as a solution to the problem of providing a standard connection for specific liquids.

According to a third aspect of the present invention, a spill-free and liquid-tight refilling connection is provided as a solution to the problem of obtaining a reliable coupling and release mechanism and of signalling coupling and release of the connection.

These and other associated problems are solved by means of the inventions specified in the attached independent claims. Preferred embodiments are specified in the respective dependent claims.
Fig. 6 shows an exploded perspective view of a first embodiment of a refilling gun according to the invention,
Fig. 7 shows the gun of Fig. 6 in a partly exploded perspective view, in which one half of the cover is removed, together with one half of the cover,
Fig. 8 shows the gun of Fig. 7 in a non-exploded state,
Fig. 9 shows a full perspective view of the gun according to Fig. 6,
Fig. 10 shows the gun according to Fig. 9 together with i.a. two halves of cover in a perspective view,
Fig. 11 shows the arrangement according to Fig. 10 put together as an assembly,
Fig. 12 shows, in a perspective view, substantially one half of the spill-free coupling, substantially according to Fig. 2, specifically showing an identification etc. transponder arranged in the female coupling part and an antenna arranged in the adapter for fitting the male coupling part into the vehicle tank inlet,
Fig. 13 schematically shows communication in a control and communication system in a spill-free liquid refilling system,
Fig. 14 schematically shows communication between multiple channel program cards of vehicle and pump control and communication modules and
Fig. 15a-c schematically show a comparatively small stand-alone tank unit (a), a mobile refilling unit (b) and an integrated system (c).

### DETAILED DESCRIPTION OF PREFERRED EMBODIMENTS

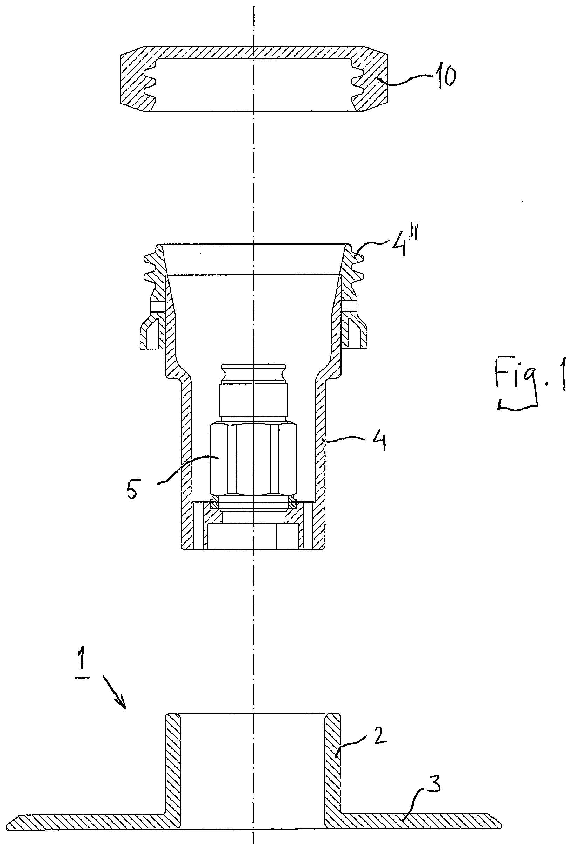

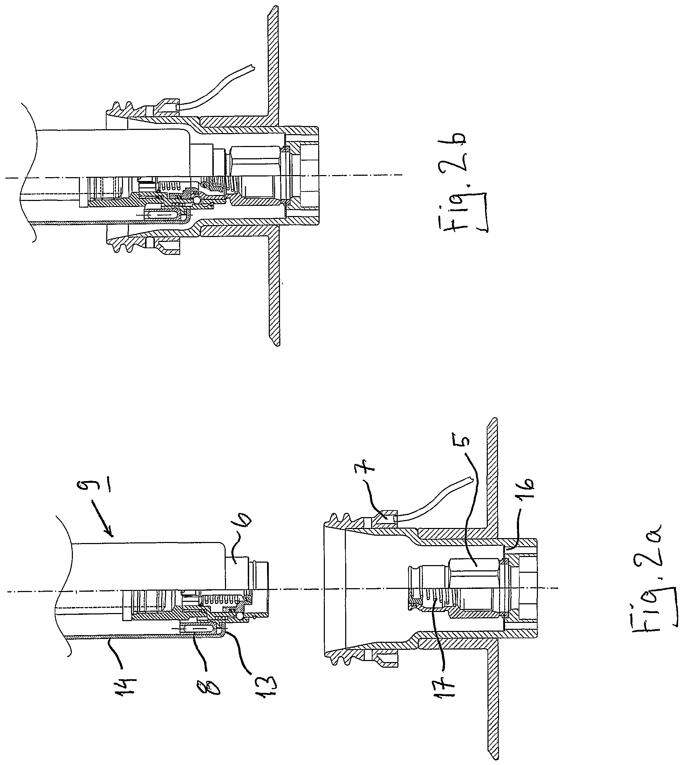

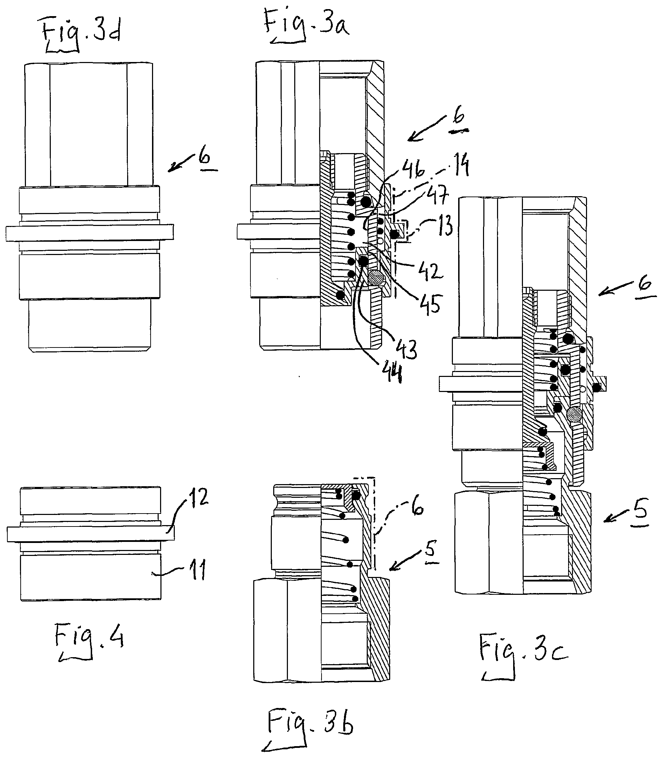

The arrangement, the connection, according to Fig. 1 for spill-free refilling comprises a tank inlet 1 in the form of a preferably cylindrical pipe part 2 protruding from a tank-wall piece 3. An adapter 4 is arranged to be fitted axially into the tank inlet and to carry a tank coupling part 5 of the spill-free connection, the tank coupling part being intended to be connected to a refilling gun coupling part 6, Fig. 2 e.g., for spill-free and liquid-tight refilling as described below and shown in e.g. Figs. 2 and 3.

In order to standardize the refilling arrangement for different liquids and, e.g., vehicles and for providing a mechanical selectivity system, the tank inlet has standard dimensions so that a standard adapter/coupling part designed for a specific liquid may be fitted into it. According to a preferred embodiment, the arrangement is intended for refilling for SCR by means of AdBlue^{®}.

Further, as shown in e.g. Fig. 2a, according to a preferred embodiment the adapter carries an antenna 7 arranged to communicate with a transponder 8 carried by the refilling gun 9.

The adapter part turned from the tank is preferably adapted, preferably by means of threads 4"or the corresponding, to receive a cap 10 covering the adapter and, thus, the tank coupling part.

Further, the connection is preferably sealed, as indicated in Fig. 1, so that refilling is possible only through the tank coupling part by the refilling gun coupling part.

The spill-free and liquid-tight refilling connection is shown in more detail in Figs. 2-4 and comprises a first coupling part 6 carried by a refilling gun 9 and a second coupling part 5 carried by a tank inlet adapter, the coupling parts being arranged to co-act in order to open a refilling connection in at least two steps, the first coupling part 6 opening the second coupling part 5, which thereafter opens the first coupling part during establishment of a refilling connection between the coupling parts, and to close the refilling connection in at least two steps, the first coupling part first being closed and thereafter closes the second coupling part when the connection is released, the procedure taking place between the two states shown in Figs. 2 and 3.

The first coupling part 6 comprises a coupling collar 11, Fig. 4, movable between a coupling position, shown in Figs. 2b and 3b, and a release position, shown in Figs. 2a and 3a, and comprising flange means 12 arranged to co-act with flange means 13 of a release sleeve 14 of the gun arranged to be moved axially from a coupling position to a release position for moving the coupling collar to the release position of the coupling collar.

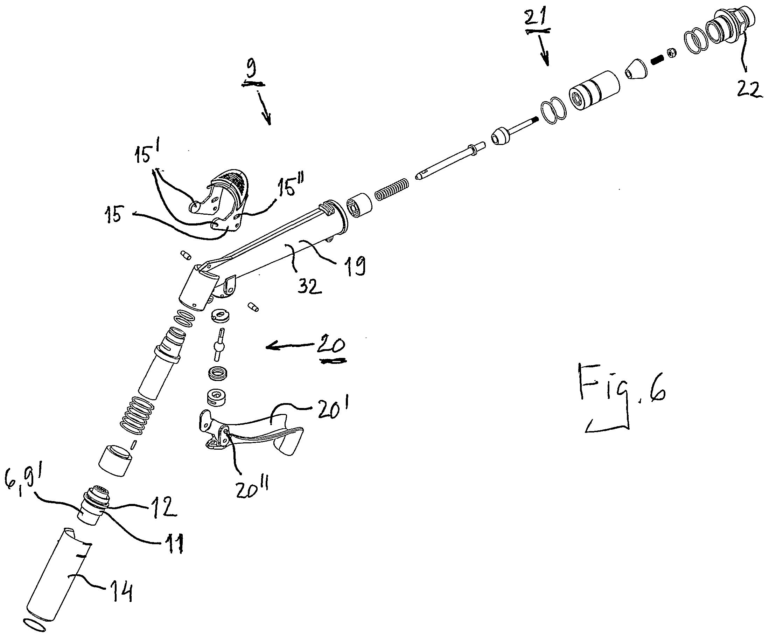

According to a preferred embodiment, the release sleeve 14 is movable by means of a link element 15, Fig. 6 e.g. of the gun, the link element being intended to be operated by a refilling operator at release. Further, the link element is intended to serve also as a signalling means, indicating when coupling connection is established and released, respectively, the link element being turnable between a release position and a raised connection position and vice versa.

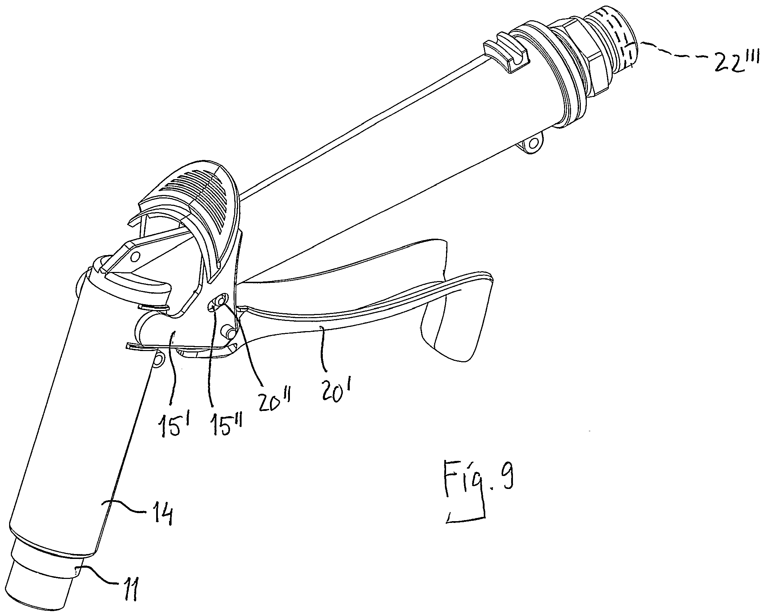

Further, according to a preferred embodiment shown in the drawings and specifically in Fig. 9, the link element 15 is arranged to provide a releasable locking function to prevent movement of the release sleeve to the release position if a trigger handle 20', described later, is out of a non-refilling position. According to the embodiment shown, the link element is provided with two link arms 15', one on each side of the release sleeve 14 for movement of the sleeve, and pivotably fastened preferably together with the trigger handle 20', the link element being arranged with at least one but preferably two elongated holes 15", one on each side, in which holes two locking pins 20" of the trigger handle are fitted so that the link element is pivotable to move the release sleeve to a release position when the trigger handle is in a non-refilling position as shown in Fig. 9 and so that the link element is locked by means of the holes and pins and not pivotable to move the release sleeve to the release position when the trigger handle is in a refilling position as is obvious from Fig. 9.

Furthermore, according to a preferred embodiment, the second coupling part is arranged in the tank inlet adapter so that the tank is ventilated both for over-pressure in the tank due to refilling and for under-pressure in the tank due to consumption of the tank content. Over-pressure is ventilated e.g. by means of a, e.g. ring-shaped, membrane 16, e.g. a rubber membrane associated with the second coupling part at the tank inlet adapter, as shown schematically in Figs. 2a and 2b. Under-pressure is ventilated e.g. by means of the second coupling part, which is opened against a spring force, the second coupling part being arranged with a spring 17 sufficiently soft for opening for ventilating the tank at under-pressure in the tank. Other solusions are also imaginable. Thus, according to yet another embodiment, threads 4" for mounting the cap 10 to the tank inlet adapter are provided with at least one channel, not shown, for ventilating the tank at under-pressure.

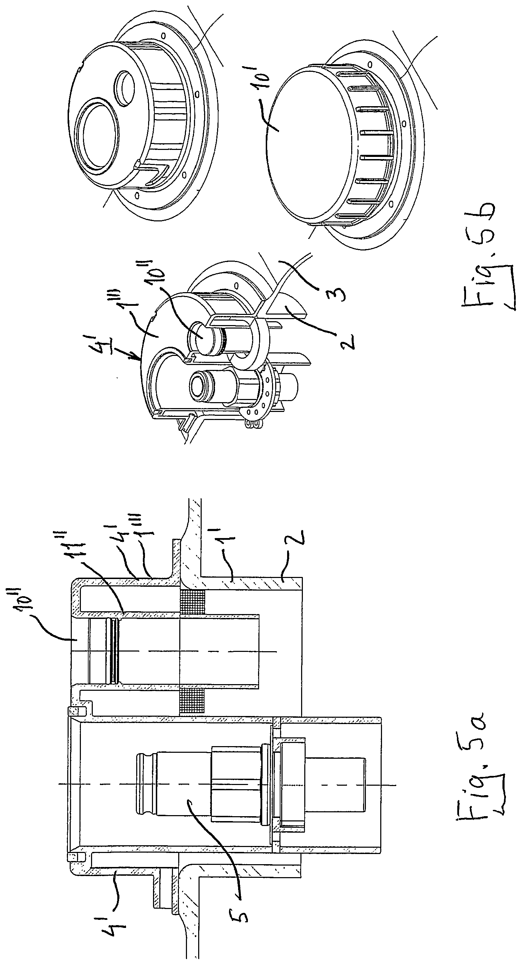

According to the second embodiment of a tank inlet 1' and the corresponding adapter 4', Figs. 5a and b, the adapter as a unit comprises both a tank coupling part 5 of the spill-free connection and a principally open inlet 1" for refilling arranged in a housing 1"' of the adapter 4', the housing thus comprising two openings arranged comparatively close together and arranged to be covered by a cap 10' in a non-refilling mode. According to preferred embodiments the non-spillfree open inlet is provided with a separate removable cap 10".

Further, according to a preferred embodiment electronics, antenna etc, not shown, for the operation of the refilling procedure etc are arranged in the housing.

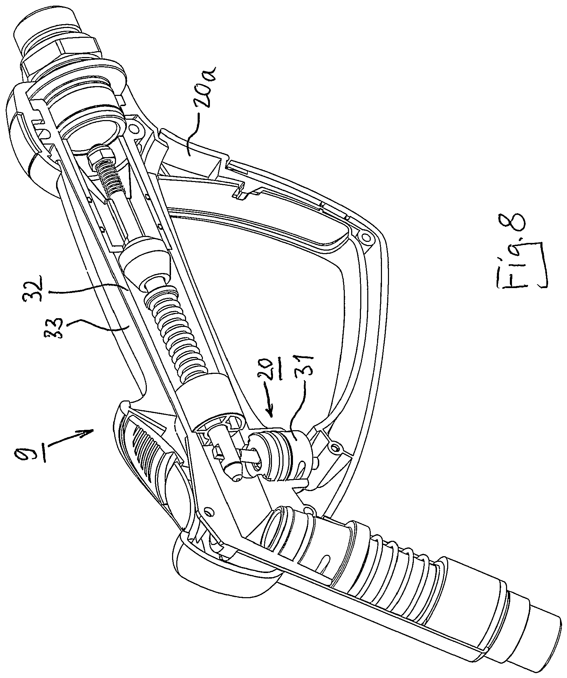

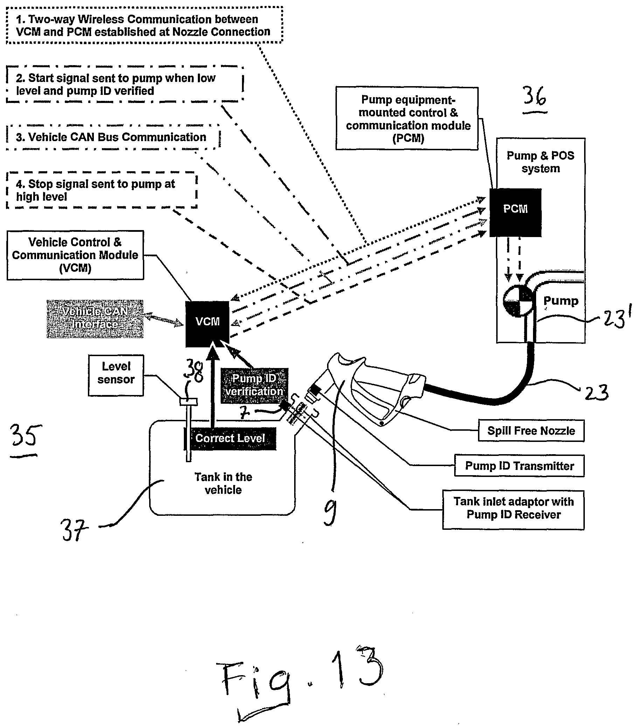

For spill-free and liquid-tight refilling of liquids, a refilling gun 9 is provided, said gun, Figs. 6-11, comprising a dispensing nozzle 9', i.e. said first coupling part 6, a handle part 19, a trigger 20 intended to be operated by a refilling operator, a valve arrangement 21 to be activated by the trigger and a liquid input connection 22 for connecting the gun to a liquid provision pipe 23 connected to a pump 23', Fig. 13.

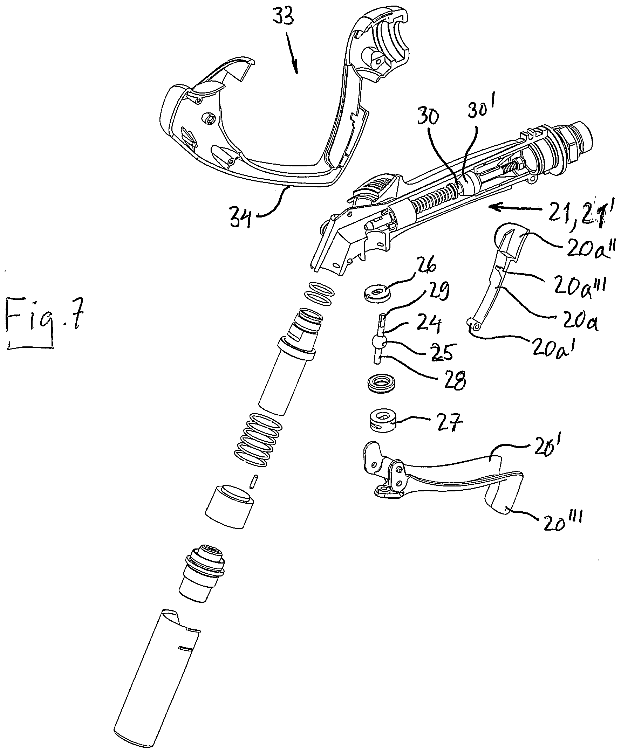

According to a preferred embodiment, Fig. 7 e.g., the gun is provided with a trigger device for transferring a trigger handle 20' movement performed by an operator of the gun to valve means 21', the trigger device providing a sealed, liquid-tight mechanical movement transfer between the trigger handle and the valve means and comprising a lever rod 24 carrying a centrally located substantially spherical sealing and journalling body 25 arranged between an upper 26 and a lower 27 sealing and lever rod guiding seat, the trigger handle being arranged for applying a force to the lever rod end 28 turned to the trigger handle, the lower end, said force being substantially perpendicular to the axial direction of the lever rod for turning the lever rod, and thus the body 25, in the journalling arrangement in a plane substantially parallel to the axial direction of the lever rod, the lever rod end 29 turned from the trigger handle, the upper end being arranged for applying an axial force to a valve rod 30 to open the gun valve 30' when said lever rod is turned, the valve rod 30 being pulled against a spring force by said force, the arrangement being schematically shown in Figs. 6-8. The seat 26, 27 and body 25 arrangement for the lever rod is supported and held in a sleeve-like housing 31 of the gun handle. Thus, no liquid is intended to pass the body 25 to the trigger handle end of the lever rod.

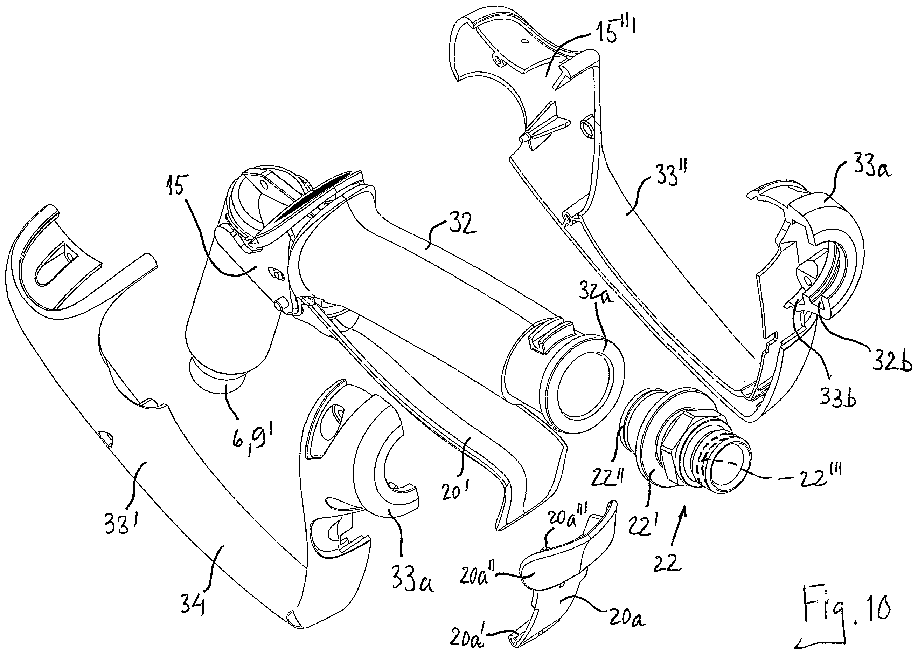

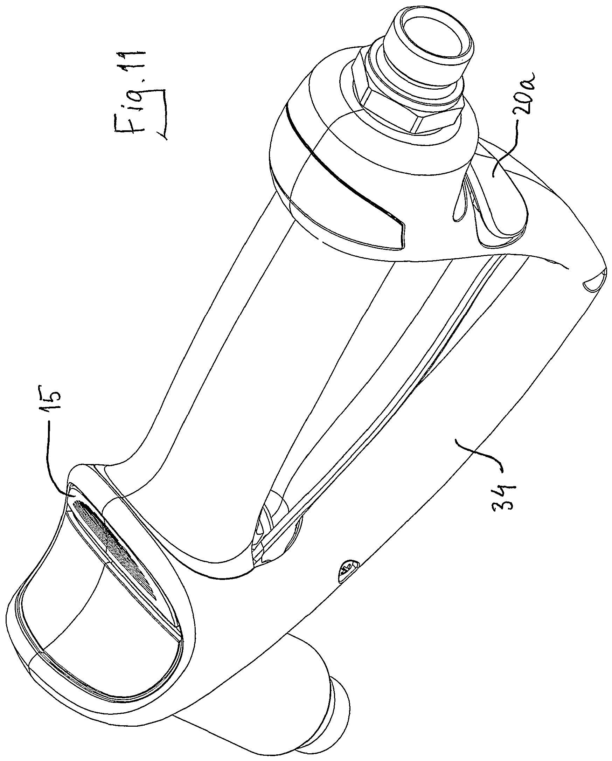

According to a preferred embodiment the gun handle comprises an inner housing 32 or cover, in which the gun valve arrangement etc. is arranged and which carries the first coupling part, the coupling sleeve, the link element etc., and an outer housing 33 or cover, Figs. 10 and 11, also providing a safety frame 34 for the trigger handle. Fig. 13 shows a preferred embodiment of a control and communication system for a spill-free refilling system according to the invention, the system comprising, as two basic parts, a vehicle part 35 and a pump part 36, the vehicle part being located mainly in the left portion of Fig. 13 and the pump part mainly in the right part of Fig. 13.

A basic element of the system is a wireless two-way communication system, indicated by communication arrows, for communication between a, e.g. vehicle-mounted, control and communication module VCM and a pump, control and communication module PCM for controlling the refilling of at least one, e.g. vehicle-mounted, tank 37.

Further elements of the system are
- spill-free nozzle with the first coupling part and transmitter for pump identification;
- tank inlet adapter with pump identification receiver, antenna, connected to the VCM;
- level sensor or meter 38 connected to the VCM, for detecting a predetermined upper liquid level indicating an upper limit level in the tank and preferably for detecting levels below said predetermined upper limit liquid level for indicating the need for refilling;
- pump 23' and pump control system POS for detecting and registering the amount refilled and for controlling the refilling procedure;
- various vehicle-mounted sensors and transmitters, not shown, for transfer of vehicle-specific data to the VCM, e.g. kilometer pulse sensor and pressure and temperature sensors for gaseous fuels.

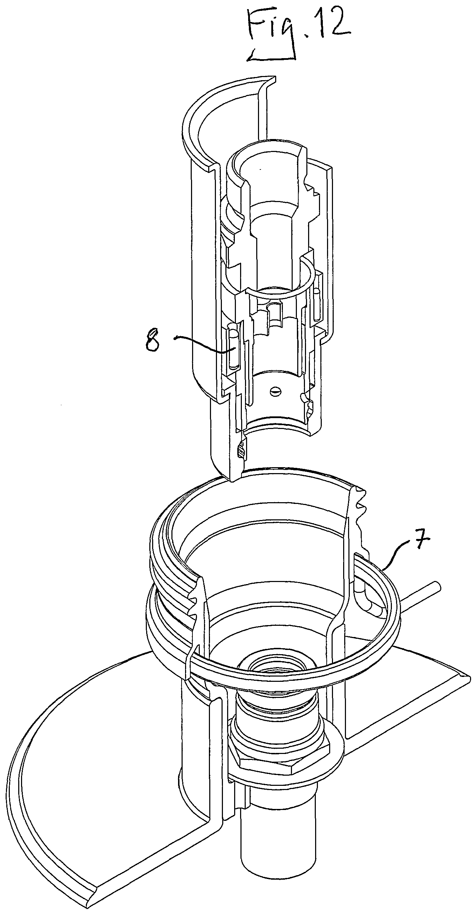

In Fig. 12 the information transfer arrangement provided in the spill-free coupling is specifically illustrated, the arrangement comprising a transmitter, a preferably passive identity, e.g. RF, carrier, applied to the gun nozzle for wireless transfer of pump identity and, preferably, gun nozzle identity to the VCM by means of a, e.g. RF, antenna connected to the VCM, the antenna being positioned adjacent to the corresponding tank inlet.

Parameter initiation and other configuration of the VCM and the PCM are in both cases arranged to be performed via direct connection to a serial port, wireless communication or a superior system, e.g. with Internet access, arranged for communication with the VCM/PCM, respectively, or combinations thereof (not shown).

According to preferred embodiments, the control and supervision performed by means of the system relates to at least one of the following features:
- refilling a certain medium into the correct tank;
- starting refilling at a level below a predetermined level;
- stopping the refilling at said predetermined level;
- transferring static and dynamic vehicle specific information carried by the vehicle and refilling information to a superior compiling and/or storing management system.

Further, according to preferred embodiments, a refilling procedure comprises the following steps, the system being provided with the corresponding arrangements:
- activating the PCM wireless communication e.g. by removing the gun from a gunstoring position at the pump;
- establishing a spill-free and liquid-tight connection between the gun nozzle and the tank inlet by means of the first and the second coupling part;
- registering, checking and storing the pump identity of the gun nozzle and verifying by the VCM the correctness of the combination of tank, gun and pump, i.e. the liquid provided; performing the communication between the PCM and the correct VCM, using the pump identity information and transferring further vehicle information, when applicable, to the PCM for storing and, preferably, checking against authorisation information in a superior system;
- checking the need for refilling by means of an upper limit level sensor or level meter communicating with the VCM before giving access to pump start and refilling;
- automatically stopping the refilling when a predetermined upper limit level detected by said sensor/meter is communicated to the PCM via the VCM, and, preferably,
- registering the refilling information e.g. in a superior compiling and/or storing management system.

Further, preferred is also that the refilling is automatically stopped when the dispensing nozzle connection to the tank inlet is disconnected and also that the refilling is automatically stopped when the wireless communication between the VCM and the PCM is broken.

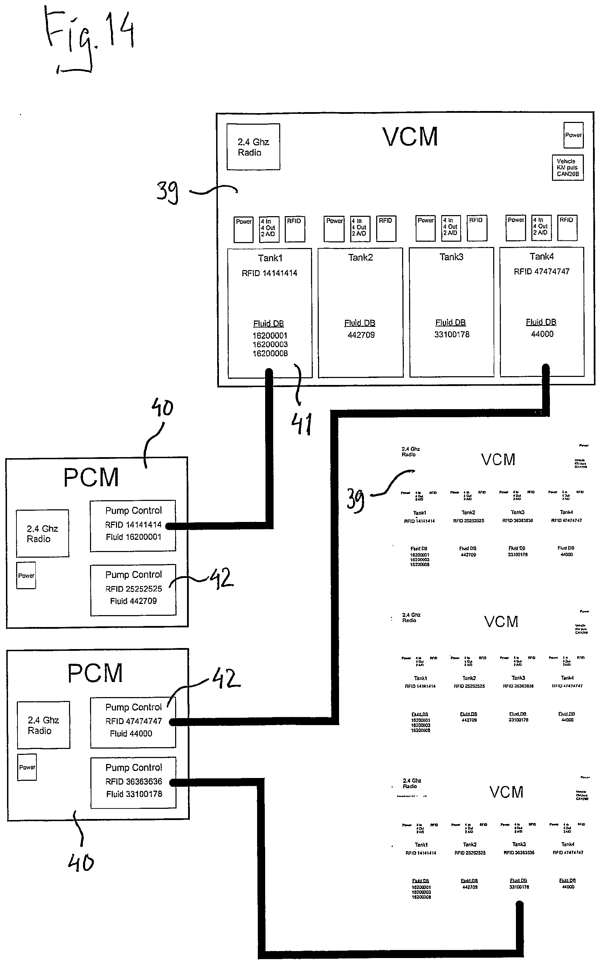

Fig. 14 shows, schematically, communication between program cards 39 of a vehicle-based VCM and program cards 40 of pump-based PCM:s, each VCM card comprising four channels 41 corresponding to four tanks of the vehicle and each PCM comprising two channels 42 corresponding to two pumps by means of pump 23' 1D transferred via the gun/tank inlet connection to the VCM, a check being intended to be performed between the VCM card channel and the PCM card channel in order to check that a correct liquid is refilled to the tank of this channel. Of course, the card may be designed to comprise only one channel or more channels, e.g. two or four as in Fig. 14.

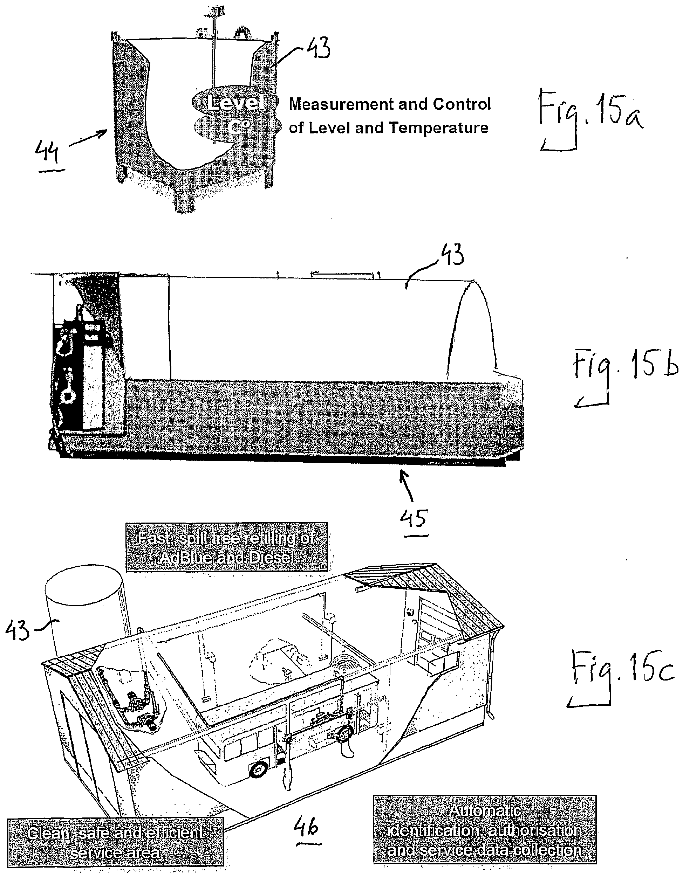

The different storing arrangements shown in Fig. 15 are specifically arranged for handling liquid solutions for selective catalytic reduction, especially AdBlue^{®}. For this, the respective containers 43, tanks, are provided by a temperature sensor for supervision of the solution temperature, AdBlue^{®} specifically freezing at about-11°C. Further, each container is provided with means (not shown) for measuring the container content in order to keep a strict record of the consumption, incoming amount and outgoing amount. This shall be the case irrespective of if the container is part of a comparatively small stand-alone unit 44, Fig. 15a, a mobile unit 45 with pump arrangement etc., Fig. 15b, or integrated in a service and refilling depot 46, Fig. 15c.

The methods as well as the function of the systems and other arrangements according to the invention should to a substantial part have been made clear from the description given above.

Thus, the basic method and system function is the ones described in association with Fig. 13, the main idea being to fully control and supervise the spill-free refilling process, keeping record of the liquid consumption as well as liquid input and output of the system together with additional information for statistics etc. This goes especially for AdBlue^{®} or the corresponding liquid solutions for SCR since it is very important that the correct product, e.g. AdBlue^{®}, is used and that it is used in amounts specified for a certain diesel engine.

Furthermore, also the components of the described systems are adapted for liquids like AdBlue^{®} or other corresponding SCR liquids, spill-free and liquid-tight performance being an important feature.

Crystal formation at air exposure has been considered for certain components of the systems and arrangements, especially for the spill-free coupling parts. Thus, in the first coupling part, e.g. Fig. 3a, an internal space 42 available for axial movement of an internal ring-shaped element 43 against a spring force for opening the coupling part is arranged so that it is always exposed to the liquid, a sealing 44 between the outer peripheral surface 45 of said element and the inner surface 46 of an element-guiding sleeve part 47 of the coupling preventing air from entering into said space, whereby crystal formation is prevented.

Part of the present invention are also computer programme product comprising a programme code for performing method steps of, primarily, anyone of the attached claims 21-34, 48 and 49. The programme code may e.g. be stored on a computer readable media or directly stored in an internal memory of a computer. According to preferred embodiments the necessary computer capacity and the corresponding memory capacity are part of both the VCM and the PCM further computer program products are specified in claims 53-59 as part of the present invention.

Above, the invention has been described in association with preferred embodiments.

Of course, further embodiments and minor changes and additions may be imagined without leaving the basic inventive idea.

Thus, according to preferred embodiments the other housing 33, Figs. 10 and 11, is made up of two halves 33', 33" corresponding to each other and being arranged to be put and held together as a cover for the inner housing 32 comprising the valve arrangement. The outer housing provides an opening 15" for the link element 15, a part of said element being arranged to protrude out of the opening in the revised connection position described above.

The outer housing end part 33a being intended to be turned to a pipe, not shown, for liquid provision to the gun, also provides a seat 33b for holding the inner housing end part and valve connection 32a, and a seat 32b for the liquid input connection 22, the connection 22 comprising flange means 22' being rotatably clamped in said seat offering a swivel configuration for the connection 22 in the outer housing end part 33b, the connection being intended to be e.g. by means of O-rings 22", sealingly introduced into the inner housing end part 32a.

Further, according to a preferred embodiment a locking arm 20a, Figs. 7 and 10 e.g, is provided for releasably holding the trigger handle 20', in a refilling position, i.e. upwards from the non-refilling position shown in e.g. Fig. 10, the locking arm being arranged in the rear end of the outer cover and having a fastening piece 20a' in its end turned from the trigger handle, a preferably platelike push piece 20a" in its other end, this end being free, and a support piece 20a"' turned to the trigger handle between said ends, the looking arm being resilient and intended to be pushed against a spring force from a non-locking position shown in e.g. Fig. 11 to a locking position in which the free end 20'" of the trigger handle in a refilling position rests upon the support piece preferably by means of a groove, not shown, in the trigger handle free end, the locking arm by its resilience being intended to return to the non-locking position when the trigger handle is lifted and thus releases the support piece 20a'" and thus permitting the trigger handle to return to the non-refilling position. The locking arm is preferably made of a polymeric material in one piece.

Also it should have been made clear that the invention, although especially designed for a solution for SCR, such as AdBlue^{®}, to a considerable extent is applicable for other liquids, such as diesel fuel, other vehicle fuels etc., and for other applications than vehicles. Also issued have been made clear that, although the invention is especially designed for vehicles and refilling related to vehicles, the application of the invention for vehicles should be considered as an example, the invention being applicable for other objects than vehicles, e.g. stationary objects of various kinds. Thus, the tank subject to refilling does not have to be a vehicle tank but e.g. a stationary or mobile storage tank. Furthermore, the pump does not have to be stationary but may e.g. be carried by a vehicle. Further, a locking arm 20a are described above may be applied in other guns for refilling and not only in the ones described here.

Thus, the invention shall not be considered limited to the embodiments shown but may be varied within the scope of the attached claims.

## Claims

1. Gun for spill-free refilling of liquids comprising a dispensing nozzle, a handle part, a trigger with a trigger handle, a valve arrangement to be activated by the trigger, and a liquid input connection for connecting the gun to a liquid provision pipe, the nozzle comprising a nozzle coupling part arranged to be releasably connected to a tank coupling part to form a liquid-tight connection for spill-free transfer of liquid from the gun to the tank, **characterized in** a release sleeve (14) arranged substantially outside of the nozzle (9') coupling part (6), the sleeve being axially movable by means of a link element (15) from a coupling position to a release position and comprising flange means (13) arranged to co-act with flange means (12) of a coupling collar (11) of said nozzle coupling part to move said coupling collar axially into a release position.

2. Gun according to claim 1, **characterized in** a trigger device (20) for transferring a trigger handle (20') movement performed by an operator of the gun to valve means (21'), the trigger device, providing a sealed, liquid-tight mechanical movement transfer between the trigger handle (20') and the valve means, comprising a lever rod (24) carrying a centrally located substantially spherical sealing and jour-nalling body (25) arranged between an upper (26) and a lower (27) sealing and lever rod guiding seat, the trigger handle being arranged for applying a force to the lower end (28) of the lever rod, said force being substantially perpendicular to the axial direction of the lever rod, for turning the lever rod in the journalling arrangement in a plane substantially parallel to the axial direction of the lever rod, the upper end part (29) of the lever rod being arranged for applying an axial force to a valve rod (30) to open the gun valve (30') when said lever rod is turned.

3. Gun according to claim 1 or 2, **characterized in that** the link element (15) is arranged to provide a releasble locking function to prevent movement of the release sleeve to the release position if the trigger handle (20') is out of a non-refilling position.

4. Gun according to claim 3, **characterized in that** the link element is provided with two link arms (15'), one on each side of the release sleeve (14) and pivotally fastened preferably together with the trigger handle, the link element being provided with at least one but preferably two elongated holes (15"), one on each side, in which holes two locking pins (20") of the trigger handle are fitted, so that the link element is pivotable to move the release sleeve to the release position when the trigger handle is in a non-refilling position and so that the link element is locked by means of the holes and pins and not pivotable to move the release sleeve to the release position when the trigger handle is out of the non-refilling position, e.g. in a refilling position.

5. Gun according to anyone of claims 1-4, **characterized in that** a locking arm (20a) is provided for releasably holding the trigger handle (20') in a refilling position.

6. Gun according to claim 5, **characterized in that** the locking arm at one end, this end being turned from the trigger handle, being provided with a fastening piece (20a') and in the other end, this end being free, being provided with a push piece, and between the ends being provided with a support piece (20a"') turned to the trigger handle, the locking arm being resilient and arranged to be pushed against a spring force by an operator of the gun from a non-holding position to a holding position, in which a free end (20"') of the trigger handle rests upon the support piece, the locking arm being arranged by its resilience to return to the non-locking position when the trigger handle is lifted to release the support piece and thus permitting the trigger handle to return to the non-refilling position.

7. Gun according to claim 5 or 6, **characterized in that** the resilient locking arm is made of a polymeric material in one piece.

8. Connection for a tank for a liquid, the connection being adapted for spill-free refilling by a gun according to any of claims 1 to 7 and comprises a tank coupling part arranged to be connected to a refilling gun coupling part for spill-free refilling, **characterized by**
- a tank inlet (1, 1') in the form of a preferably cylindrical pipe part (2) protruding from a tank wall piece (3), and
an adapter (4, 4') to be fitted axially into the tank inlet and carrying the tank coupling part (5).

9. Connection according to claim 8, **characterized in that** the adapter (4') carries i.a. electronic means for communication, control of the refilling process etc.

10. Connection according to claim 8 or 9, **characterized in that** the adapter (4'), apart from a spill-free refilling tank coupling part (5), comprises a non-spill-free inlet.

11. Connection according to claim 8, 9 or 10, **characterized in that** the tank inlet (1) has standard dimensions so that a standard adapter/coupling part designed for a specific liquid may be fitted into it, a mechanical selectivity system being provided.

12. Connection according to claim 8, 9, 10 or 11, **characterized in that** the adapter (4) carries an antenna (7) arranged to communicate with a transponder (8) carried by the refilling gun.

13. Connection according to anyone of claims 8-12, **characterized in that** the adapter part turned from the tank (37) is adapted to receive a cap (10, 10') covering the adapter and, thus, the tank coupling part.

14. Connection according to anyone of claims 8-13, **characterized in that** it is sealed, refilling being possible only through the tank coupling part (5) by the refilling gun coupling part (6).

15. Spill-free and liquid-tight refilling connection comprising a first coupling part carried by a refilling gun for spill-free refilling and a second coupling part carried by a tank inlet, the coupling parts being arranged to co-act in order to open a refilling connection in at least two steps, the first coupling part opening the second coupling part, which thereafter opens the first coupling part, and to close the refilling connection in at least two steps, the first coupling part first being closed and thereaf ter closes the second coupling part when the connection is released, **characterized in that** the first coupling part (6) comprises a coupling collar (11) movable between a coupling position and a release position and comprising flange means (12) arranged to co-act with flange means (13) of a release sleeve (14) of the gun arranged to be moved axially from a coupling position to a release position for moving the coupling collar to the release position of the coupling collar, the release sleeve arranged substantially outside of the first coupling part, and wherein the release sleeve is movable by means of a link element (15) of the gun, the link element being intended to be operated by a refilling operator.

16. Connection according to claim 15, **characterized in that** the link element is intended to serve also as a signalling means indicating when connection is established and released, respectively.

17. Connection according to any one of the claims 15-16, **characterized in that** the second coupling part (5) is arranged in a liquid-tight sealed manner in the tank inlet (1), refilling being possible only through the second coupling part as opened by the first coupling part (6).

18. Connection according to any one of the claims 15-17, **characterized in that** the second coupling part (5) is arranged in the tank inlet (1) so that the tank (37) is ventilated both for over-pressure in the tank due to refilling and for under-pressure in the tank due to consumption of the tank content.

19. Connection according to claim 18, **characterized by** a membrane (16), e.g. a rubber membrane arrangement associated with the second coupling part (5) at the tank inlet (1) for ventilating the tank at over-pressure in the tank.

20. Connection according to claim 18 or 19, **characterized in that** the second coupling part, which is opened against a spring force, is arranged with a spring (17) suf ficiently soft to open for ventilating the tank at under-pressure in the tank.

21. Connection according to any one of the claims 18-20, **characterized in that** threads (4") or the corresponding for mounting a cap (10) to the tank inlet are provided with at least one channel for ventilating the tank.

## Patentansprüche

1. Pistole zum überlauffreien Nachfüllen von Flüssigkeiten, umfassend eine Abgabedüse, einen Griffteil, einen Auslöser mit einem Auslösegriff, eine Ventilanordnung, die durch den Auslösegriff auslösbar ist, und eine Flüssigkeitseingangsverbindung zum Verbinden der Pistole an ein Flüssigkeitsbereitstellungsrohr, die Düse umfassend ein Düsenkupplungsteil, das lösbar mit einem Tankkupplungsteil zur Bildung einer flüssigkeitsdichten Verbindung zur überlauffreien Übertragung der Flüssigkeit von der Pistole zu dem Tank, **dadurch gekennzeichnet, dass** in einer Entriegelungshülse (14), die im Wesentlichen außerhalb des Düsen(9')-Kupplungsteils (6) angeordnet ist, wobei die Hülse mittels eines Verbindungselements (15) von einer Kupplungsposition in eine Freigabeposition axial verschiebbar ist und umfassend Flanscheinrichtungen (13), die zum Zusammenwirken mit Flanscheinrichtungen (12) eines Kupplungskragens (11) des Düsenkupplungsteils angeordnet sind, um den Kupplungskragen axial in eine Freigabestellung zu bewegen.

2. Pistole nach Anspruch 1, **gekennzeichnet durch** eine Auslöseeinrichtung (20) zum Übertragen einer Auslösegriff(20')-Bewegung eines Bedieners der Pistole an eine Ventileinrichtung (21'), wobei die Auslösevorrichtung, die eine versiegelte, flüssigkeitsdichte mechanische Bewegungsübertragung zwischen dem Auslösegriff (20') und der Ventileinrichtung bereitstellt, eine Hebelstange (24), die einen mittig angeordneten, im Wesentlichen kugelförmigen Dichtungs- und Lagerungskörper (25) trägt, angeordnet zwischen einem oberen (26) und einem unteren (27) Dichtungs- und Hebelstangenführungssitz, umfasst, wobei der Auslösehandgriff zum Aufbringen einer Kraft auf das untere Ende (28) der Hebelstange angeordnet ist, wobei die Kraft im Wesentlichen senkrecht zur axialen Richtung der Hebelstange ist, zum Drehen der Hebelstange in die Journaling-Anordnung in einer Ebene, die im Wesentlichen parallel zu der axialen Richtung der Hebelstange ist, wobei das obere Endteil (29) der Hebelstange zum Aufbringen einer axialen Kraft auf eine Ventilstange (30) zum Öffnen des Pistolenventils (30 ') angeordnet ist, wenn die Hebelstange gedreht wird.

3. Pistole nach Anspruch 1 oder 2, **dadurch gekennzeichnet, dass** das Verbindungselement (15) zum Bereitstellen einer lösbaren Verriegelungsfunktion zum Verhindern einer Bewegung der Entriegelungshülse in die Freigabeposition angeordnet ist, wenn der Auslösegriff (20') außerhalb einer Nicht-Nachfüllen-Position steht.

4. Pistole nach Anspruch 3, **dadurch gekennzeichnet, dass** das Verbindungselement mit zwei Verbindungsarmen (15') bereitgestellt wird, einer auf jeder Seite der Entriegelungshülse (14) und drehbar befestigt vorzugsweise zusammen mit dem Auslösegriff, wobei das Verbindungselement mit mindestens einem, jedoch vorzugsweise mit zwei verlängerten Löchern (15"), eins auf jeder Seite, in die zwei Verriegelungsstifte (20") des Auslösegriffs eingebaut sind, so dass das Verbindungselement zum Bewegen der Entriegelungshülse in die Freigabeposition drehbar ist, wenn der Auslösegriff in einer Nicht-Nachfüllen-Position steht und dass das Verbindungselement durch die Löcher und Stifte verriegelt ist und zum Bewegen der Entriegelungshülse in die Freigabeposition nicht drehbar ist, wenn der Auslösegriff außerhalb der Nicht-Nachfüllen-Position steht, z.B. in einer Nachfüllposition.

5. Pistole nach einem der Ansprüche 1-4, **dadurch gekennzeichnet, dass** ein Verschlussarm (20a) zum lösbaren Halten des Auslösegriffs (20') in einer Nachfüllposition bereitgestellt wird.

6. Pistole nach Anspruch 5, **dadurch gekennzeichnet, dass** der Verschlussarm an einem Ende, wobei dieses Ende von dem Auslösegriff gedreht wird, mit einem Befestigungsteil (20a') bereitgestellt wird und an dem anderen Ende, wobei dieses Ende frei ist, mit einem Druckteil bereitgestellt wird, und zwischen den Enden mit einem Halteteil (20a"') bereitgestellt wird, das zu dem Auslösegriff weist, wobei der Verschlussarm elastisch und so angeordnet ist, um von einem Bediener gegen eine Federkraft der Pistole aus einer Nicht-Halten-Position in eine Halten-Position gedrückt zu werden, in der ein freies Ende (20"') des Auslösegriffs auf dem Halteteil ruht, wobei der Verschlussarm angeordnet ist, durch seine Elastizität in die Nicht-Verriegelt-Position zurückzukehren, wenn der Auslösegriff zum Freigeben des Halteteils angehoben wird und so dem Auslösegriff das Rückkehren in die Nicht-Nachfüllen-Position erlaubt.

7. Pistole nach Anspruch 5 oder 6, **dadurch gekennzeichnet, dass** der elastische Verschlussarm aus einem polymeren Material in einem Stück gefertigt ist.

8. Verbindung für einen Tank für eine Flüssigkeit, wobei die Verbindung zum überlauffreien Nachfüllen durch eine Pistole nach einem der Ansprüche 1 bis 7 angepasst ist und ein Tankkupplungsteil umfasst, wobei das Tankkupplungsteil angeordnet ist, mit einem Nachfüllpistolenkupplungsteil zum überlauffreien Nachfüllen verbunden zu werden, **gekennzeichnet durch**
- einen Tankeinlass (1, 1') in der Form eines vorzugsweise zylindrischen Rohrteils (2), das aus einem Tankwandstück (3) herausragt, und
einen Adapter (4, 4') zum axialen Einsetzen in den Tankeinlass und zum Tragen des Tankkupplungsteils (5).

9. Verbindung nach Anspruch 8, **dadurch gekennzeichnet, dass** der Adapter (4') elektronische Mittel zur Kommunikation, zur Kontrolle des Nachfüllverfahrens usw. trägt.

10. Verbindung nach Anspruch 8 oder 9, **dadurch gekennzeichnet, dass** der Adapter (4'), getrennt von dem überlauffreien Nachfülltankkupplungsteil (5), einen nicht-überlauffreien Einlass umfasst.

11. Verbindung nach Anspruch 8, 9 oder 10, **dadurch gekennzeichnet, dass** der Tankeinlass (1) Standardabmessungen aufweist, sodass ein Standardadapter/Kupplungsteil, das für eine spezielle Flüssigkeit ausgelegt ist, in den Einsatz eingesetzt werden kann, wodurch ein mechanisches Auswahlsystem bereitgestellt wird.

12. Verbindung nach Anspruch 8, 9, 10 oder 11, **dadurch gekennzeichnet, dass** der Adapter (4) eine Antenne (7) trägt, die zum Kommunizieren mit einem Transponder (8) angeordnet ist, der von der Nachfüllpistole getragen wird.

13. Verbindung nach einem der Ansprüche 8-12, **dadurch gekennzeichnet, dass** das vom Tank (37) gedrehte Adapterteil zum Erhalten einer Kappe (10, 10'), die den Adapter und folglich das Tankkupplungsteil abdeckt, angepasst ist.

14. Verbindung nach einem der Ansprüche 8-13, **dadurch gekennzeichnet, dass** sie verschlossen ist, wobei Nachfüllen nur durch das Tankkupplungsteil (5) durch das Nachfüllpistolenkupplungsteil (6) möglich ist.

15. Überlauffreie und flüssigkeitsdichte Nachfüllverbindung, umfassend ein erstes Kupplungsteil, das von einer Nachfüllpistole zum überlauffreien Nachfüllen getragen wird und ein zweites Kupplungsteil, das von einem Tankeinlass getragen wird, wobei die Kupplungsteile zum Zusammenarbeiten angeordnet sind, um eine Nachfüllverbindung in mindestens zwei Schritten zu öffnen, wobei das erste Kupplungsteil das zweite Kupplungsteil öffnet, das danach das erste Kupplungsteil öffnet, und um die Nachfüllverbindung in mindestens zwei Schritten zu schließen, wobei das erste Kupplungsteil zuerst geschlossen wird und danach das zweite Kupplungsteil schließt, wenn die Verbindung gelöst ist, **dadurch gekennzeichnet, dass** das erste Kupplungsteil (6) einen Kupplungskragen (11) umfasst, der zwischen einer Kupplungsposition und einer Freigabeposition bewegbar ist und umfassend eine Flanscheinrichtung (12), die zum Zusammenarbeiten mit einer Flanscheinrichtung (13) einer Entriegelungshülse (14) der Pistole angeordnet ist, um axial von einer Kupplungsposition zu einer Freigabeposition zum Bewegen des Kupplungskragens zu der Freigabeposition des Kupplungskragens bewegt zu werden, wobei die Entriegelungshülse im Wesentlichen außerhalb des ersten Kupplungsteils angeordnet ist, und wobei die Entriegelungshülse durch ein Verbindungselement (15) der Pistole bewegbar ist, wobei das Verbindungselement zur Bedienung durch einen Nachfüllbediener gedacht ist.

16. Verbindung nach Anspruch 15, **dadurch gekennzeichnet, dass** das Verbindungselement auch als Signaleinrichtung dienen soll, wenn die Verbindung jeweils hergestellt und gelöst ist.

17. Verbindung nach einem der Ansprüche 15-16, **dadurch gekennzeichnet, dass** das zweite Kupplungsteil (5) in einer flüssigkeitsdichten Weise in dem Tankeinlass (1) angeordnet ist, wobei Nachfüllen nur durch das zweite Kupplungsteil möglich ist, wenn es durch das erste Kupplungsteil (6) geöffnet wurde.

18. Verbindung nach einem der Ansprüche 15-17, **dadurch gekennzeichnet, dass** das zweite Kupplungsteil (5) in dem Tankeinlass (1) angeordnet ist, so dass der Tank (37) sowohl gegen Überdruck in dem Tank aufgrund von Nachfüllen und gegen Unterdruck in dem Tank aufgrund von Verbrauch des Tankinhalts belüftet wird.

19. Verbindung nach Anspruch 18, **gekennzeichnet durch** eine Membrane (16), z.B. eine Kautschukmembrananordnung, die mit dem zweiten Kupplungsteil (5) an dem Tankeinlass (1) zum Belüften des Tanks bei Überdruck in dem Tank angeordnet ist.

20. Verbindung nach Anspruch 18 oder 19, **dadurch gekennzeichnet, dass** das zweite Kupplungsteil, das gegen eine Federkraft geöffnet wird, mit einer Feder (17) angeordnet ist, die genügend weich ist, den Tank bei Unterdruck zu belüften.

21. Verbindung nach einem der Ansprüche 18-20, **dadurch gekennzeichnet, dass** Gewinde (4") oder die Entsprechungen zum Befestigen einer Kappe (10) auf den Tankeinlass mit mindestens einem Kanal zum Belüften des Tanks bereitgestellt werden.

## Revendications

1. Pistolet destiné au remplissage sans fuite de liquides comprenant une buse de distribution, une partie de poignée, un déclencheur doté d'une poignée de déclencheur, un agencement de vanne destiné à être activé par le déclencheur et une connexion d'entrée de liquide pour connecter le pistolet à un tuyau de fourniture de liquide, la buse comprenant une partie de couplage de buse agencée pour être connectée de manière libérable à une partie de couplage de réservoir pour former une connexion étanche aux liquides pour le transfert sans fuite de liquide du pistolet au réservoir, **caractérisé par** un manchon de libération (14) agencé sensiblement à l'extérieur de la partie de couplage (6) de la buse (9'), le manchon étant mobile en sens axial au moyen d'un élément de liaison (15) d'une position de couplage à une position de libération et comprenant un moyen de bride (13) agencé pour coopérer avec un moyen de bride (12) d'un collier de couplage (11) de ladite partie de couplage de buse pour déplacer ledit collier de couplage axialement dans une position de libération.

2. Pistolet selon la revendication 1, **caractérisé par** un dispositif déclencheur (20) pour transférer un mouvement de la poignée de déclencheur (20') exécuté par un opérateur du pistolet à un moyen de vanne (21'), le dispositif déclencheur, fournissant un transfert de mouvement mécanique scellé, étanche aux liquides entre la poignée de déclencheur (20') et le moyen de vanne, comprenant une tige de levier (24) portant un corps de scellage et de tourillonnement (25) sensiblement sphérique situé en position centrale agencé entre des supports supérieur (26) et inférieur (27) de scellage et guidage de tige de levier, la poignée de déclencheur étant agencée pour appliquer une force à l'extrémité inférieure (28) de la tige de levier, ladite force sensiblement perpendiculaire à la direction axiale de la tige de levier, pour tourner la tige de levier dans l'agencement de tourillonnement dans un plan sensiblement parallèle à la direction axiale de la tige de levier, la partie d'extrémité supérieure (29) de la tige de levier étant agencée pour appliquer une force axiale à une tige de vanne (30) pour ouvrir la vanne de pistolet (30') lorsque ladite tige de levier est tournée.

3. Pistolet selon la revendication 1 ou 2, **caractérisé en ce que** l'élément de liaison (15) est agencé pour fournir une fonction de verrouillage libérable pour empêcher un mouvement du manchon de libération à la position de libération si la poignée de déclencheur (20') se trouve en dehors d'une position de non-remplissage.

4. Pistolet selon la revendication 3, **caractérisé en ce que** l'élément de liaison comporte deux bras de liaison (15'), un sur chaque côté du manchon de libération (14) et fixés de façon pivotante de préférence conjointement avec la poignée de déclencheur, l'élément de liaison étant pourvu d'au moins un, mais de préférence deux trous allongés (15"), un sur chaque côté, trous dans lesquels sont montées deux broches de verrouillage (20") de la poignée de déclencheur, de sorte que l'élément de liaison puisse pivoter pour déplacer le manchon de libération à la position de libération lorsque la poignée de déclencheur se trouve dans une position de non-remplissage et de sorte que l'élément de liaison soit verrouillé au moyen des trous et broches et ne puisse pas pivoter pour déplacer le manchon de libération à la position de libération lorsque la poignée de déclencheur se trouve en dehors de la position de non-remplissage, par exemple, dans une position de remplissage.

5. Pistolet selon l'une quelconque des revendications 1 à 4, **caractérisé en ce qu'**un bras de verrouillage (20a) est fourni pour maintenir de manière libérable la poignée de déclencheur (20') dans une position de remplissage.

6. Pistolet selon la revendication 5, **caractérisé en ce que** le bras de verrouillage, à une extrémité, cette extrémité étant tournée par rapport à la poignée de déclencheur, comporte une pièce de fixation (20a') et dans l'autre extrémité, cette extrémité étant libre, comporte une pièce de poussée et, entre les extrémités comporte une pièce de support (20a"') tournée vers la poignée de déclencheur, le bras de verrouillage étant élastique et agencé pour être poussé à l'encontre d'une force de ressort par un opérateur du pistolet d'une position de non-maintien à une position de maintien, dans laquelle une extrémité libre (20"') de la poignée de déclencheur repose sur la pièce de support, le bras de verrouillage étant agencé par son élasticité pour revenir à la position de non-verrouillage lorsque la poignée de déclencheur est levée pour libérer la pièce de support et permettant ainsi à la poignée de déclencheur de revenir à la position de non-remplissage.

7. Pistolet selon la revendication 5 ou 6, **caractérisé en ce que** le bras de verrouillage élastique est constitué d'un matériau polymère en une pièce.

8. Connexion destinée à un réservoir pour un liquide, la connexion étant conçue pour le remplissage sans fuite par un pistolet selon l'une quelconque des revendications 1 à 7 et comprend une partie de couplage de réservoir agencée pour être connectée à une partie de couplage de pistolet de remplissage pour le remplissage sans fuite, **caractérisée par**
- une entrée de réservoir (1, 1') sous la forme d'une partie de tuyau de préférence cylindrique (2) faisant saillie d'une pièce de paroi de réservoir (3) et
un adaptateur (4, 4') destiné à être monté axialement dans l'entrée de réservoir et portant la partie de couplage de réservoir (5).

9. Connexion selon la revendication 8, **caractérisée en ce que** l'adaptateur (4') porte entre autres un moyen électronique pour la communication, la commande du processus de remplissage et autres.

10. Connexion selon la revendication 8 ou 9, **caractérisée en ce que** l'adaptateur (4'), outre une partie de couplage de réservoir de remplissage sans fuite (5), comprend une entrée qui n'est pas sans fuite.

11. Connexion selon la revendication 8, 9 ou 10, **caractérisée en ce que** l'entrée de réservoir (1) possède des dimensions standard, de sorte qu'un adaptateur/une partie de couplage standard conçu(e) pour un liquide spécifique puisse être monté(e) dans celle-ci, un système de sélectivité mécanique étant fourni.

12. Connexion selon la revendication 8, 9, 10 ou 11, **caractérisée en ce que** l'adaptateur (4) porte une antenne (7) agencée pour communiquer avec un transpondeur (8) porté par le pistolet de remplissage.

13. Connexion selon l'une quelconque des revendications 8 à 12, **caractérisée en ce que** la partie adaptateur tournée par rapport au réservoir (37) est conçue pour recevoir un bouchon (10, 10') couvrant l'adaptateur et, donc, la partie de couplage de réservoir.

14. Connexion selon l'une quelconque des revendications 8 à 13, **caractérisée en ce qu'**elle est scellée, le remplissage étant possible uniquement à travers la partie de couplage de réservoir (5) par la partie de couplage de pistolet de remplissage (6).

15. Connexion de remplissage sans fuite et étanche aux liquides comprenant une première partie de couplage portée par un pistolet de remplissage pour un remplissage sans fuite et une seconde partie de couplage portée par une entrée de réservoir, les parties de couplage étant agencées pour coopérer afin d'ouvrir une connexion de remplissage en au moins deux étapes, la première partie de couplage ouvrant la seconde partie de couplage, qui, par la suite, ouvre la première partie de couplage et pour fermer la connexion de remplissage en au moins deux étapes, la première partie de couplage étant d'abord fermée et, par la suite, ferme la seconde partie de couplage lorsque la connexion est libérée, **caractérisée en ce que** la première partie de couplage (6) comprend un collier de couplage (11) mobile entre une position de couplage et une position de libération et comprend un moyen de bride (12) agencé pour coopérer avec un moyen de bride (13) d'un manchon de libération (14) du pistolet agencé pour être déplacé axialement d'une position de couplage à une position de libération pour déplacer le collier de couplage à la position de libération du collier de couplage, le manchon de libération étant agencé sensiblement à l'extérieur de la première partie de couplage et dans laquelle le manchon de libération peut être déplacé au moyen d'un élément de liaison (15) du pistolet, l'élément de liaison étant prévu pour être actionné par un opérateur de remplissage.

16. Connexion selon la revendication 15, **caractérisée en ce que** l'élément de liaison est prévu pour servir également de moyen de signalisation indiquant respectivement lorsqu'une connexion est établie et libérée.

17. Connexion selon l'une quelconque des revendications 15 à 16, **caractérisée en ce que** la seconde partie de couplage (5) est agencée d'une manière scellée étanche aux liquides dans l'entrée de réservoir (1), le remplissage étant possible uniquement à travers la seconde partie de couplage lorsqu'elle est ouverte par la première partie de couplage (6).

18. Connexion selon l'une quelconque des revendications 15 à 17, **caractérisée en ce que** la seconde partie de couplage (5) est agencée dans l'entrée de réservoir (1) de sorte que le réservoir (37) soit ventilé à la fois pour une surpression dans le réservoir du fait du remplissage et pour une sous-pression dans le réservoir du fait de la consommation du contenu du réservoir.

19. Connexion selon la revendication 18, **caractérisée par** une membrane (16), par exemple, un agencement de membrane en caoutchouc associé à la seconde partie de couplage (5) au niveau de l'entrée de réservoir (1) pour la ventilation du réservoir lors d'une surpression dans le réservoir.

20. Connexion selon la revendication 18 ou 19, **caractérisée en ce que** la seconde partie de couplage, qui est ouverte à l'encontre d'une force de ressort, est agencée avec un ressort (17) suffisamment mou pour s'ouvrir de façon à ventiler le réservoir lors d'une sous-pression dans le réservoir.

21. Connexion selon l'une quelconque des revendications 18 à 20, **caractérisée en ce que** des filetages (4") ou un élément correspondant pour le montage d'un bouchon (10) sur l'entrée de réservoir sont pourvus d'au moins un canal pour la ventilation du réservoir.
